**Europäisches Patentamt**

**European Patent Office**

**Office européen des brevets**

(19)

(11) Publication number : **0 470 786 A2**

(12) # EUROPEAN PATENT APPLICATION

(21) Application number : **91307158.5**

(22) Date of filing : **05.08.91**

(51) Int. Cl.$^5$ : **H01Q 21/24, H04B 7/00**

(30) Priority : **06.08.90 US 562686**

(43) Date of publication of application :
**12.02.92 Bulletin 92/07**

(84) Designated Contracting States :
**DE FR GB IT**

(71) Applicant : **Gould, Harry J.**
**1649 East Hale**
**Mesa, Arizona 85203 (US)**

(72) Inventor : **Gould, Harry J.**
**1649 East Hale**
**Mesa, Arizona 85203 (US)**

(74) Representative : **Dealtry, Brian et al**
**Eric Potter & Clarkson St. Mary's Court St.**
**Mary's Gate**
**Nottingham NG1 1LE (GB)**

(54) **Electronic rotatable polarization antenna feed apparatus.**

(57)    Electronically rotatable polarization antenna feed apparatus includes a pair of probes oriented in an orthogonal relationship to each other (90 degrees apart) and the probes extend through the rear wall of a waveguide. The probes are connected through low noise amplifiers to variable resistors or variable gain amplifiers. The signal to noise ratio of the desirable polarization signal from the two probes is maximized and the undesirable polarization signal from the two probes is cancelled. If desired, polarization components from the two probes may be combined so that both the horizontal and the vertical polarization signals may be used simultaneously. The apparatus may be used with linearly polarized signals and with circularly polarized signals.

FIG. 9A

## BACKGROUND OF THE INVENTION

Field of the Invention:

This invention relates to antenna receiving apparatus for receiving radio frequency signals and, more particularly, to antenna feed apparatus for receiving polarized radio signals.

Description of the Prior Art:

There are numerous communication satellites orbiting the earth in geosynchronous orbit. The communication satellites orbit the earth at a height of about 35,000 kilometers, or about 22,300 miles, from the earth over the equator. At that distance, the satellites remain substantially fixed in position over the earth, since the movement of the satellite over the earth matches the rotation of the earth.

The centrifugal force created by the speed of a satellite as it orbits the earth balances the force of earth's gravity, allowing the satellite to orbit at a fixed location above the earth's surface.

Each communications satellite includes a plurality of transponders, with each transponder comprising a discrete electronic path to and from the satellite. That is, for a single transponder, there is a predetermined frequency path linking a transmitter on the earth with the satellite and a frequency transmitted from the satellite back to the earth.

Each frequency path commonly includes two transmission modes, one mode for a horizontally polarized signal and one for a vertically polarized signal. In the horizontally polarized signal, the electric field carrier oscillates or vibrates in a horizontal plane, and in the vertically polarized signal the electric field carrier oscillates or vibrates in the vertical plane. In other words, the electric fields are aligned in the vertical or the horizontal planes, or substantially ninety degrees apart. These two electric fields are often referred to as orthogonal electric fields. Orthogonal fields can also be transmitted as right hand circular polarizations (RHCP) and left hand circular polarizations (LHCP). The transmission of orthogonal fields allows for the number of satellite transponders to be doubled for an allotted frequency bandwidth or for the use of two transponders for each frequency path.

The reception of radio (TV) signals from satellite transmitters, such as used in home satellite receiving systems or television receive only (TVRO) systems include polarized radio signals that include both horizontal and vertical polarizations, or right hand circular polarization and left hand circular polarization.

The radio signals are received by what is commonly referred to as satellite dishes, which are typically a parabolic dish antenna and an antenna feed located at the focal point of the parabolic dish antenna. The feed element collects the radio signals gathered by the dish antenna, and the radio signals received by the feed are then transferred or routed to the appropriate electronic circuitry for processing to provide the picture and sound at a television set.

The antenna feed includes one or two probes within a wave guide. The probe(s) is/are used to couple the polarized signals to the electronic circuitry for processing.

After a signal is received by a feed, the signal is routed to an amplifier where the signal is amplified. Since the signal coming from a satellite is generally very weak, it is important that the amplifier be a low-noise amplifier, or LNA. While all amplifiers add a certain amount of noise to any signal being amplified, it is important in the TVRO industry that the amplifier add minimum noise for maximum gain.

Under normal conditions the noise or noise power contributed by an LNA is at a fixed level regardless of the strength of the amplified signal. When the noise power of the amplifier approaches the power level of the amplified signal, the ability to detect and process the signal is limited regardless of the gain of the amplifier. The ability to amplify signals with minimum noise contribution is often referred to as the signal-to-noise ratio, or the noise figure, or the noise temperature. As indicated above, it is important that the noise added to an amplified signal of an amplifier be minimized in such applications as satellite reception.

For maximum economic value, the size of the receiving antenna, the feed, and the amplifier are all important elements. Accordingly, the antenna size must be matched with economy of manufacture and installation, and the antenna feed must be such as to provide the highest possible coupling efficiency to the antenna. Finally, the amplifier should provide maximum amplification with minimum noise power added to the amplified signal. The apparatus of the present invention allows the probes to be connected directly to LNAs. This reduces resistive loss in a circuit between a probe and an LNA. This, then, directly improves the noise figure.

One type of early feed includes two probes, positioned ninety degrees apart. One probe is mounted vertically and the other probe is mounted horizontally. Accordingly, the vertically mounted probe receives the vertically polarized radio signals and the horizontally mounted probe receives the horizontally polarized radio signals. The probes are appropriately connected to low noise amplifiers, and the amplifiers are in turn connected to other circuitry which processes the radio signals and provides the picture and sound for a television set.

The fixed probes, as discussed above, may work well when properly aligned for receiving signals from a single satellite. However, when the parabolic dish antenna is aimed for reception from a different satellite, the fixed alignment of the two probes in the feed may be skewed from a relatively slight amount to a substantial amount, depending on the orientation of the particular satellite from which signals are being received or on the skewing of the signals from the satellite. Thus, when the antenna is aimed at a different satellite from the satellite originally aligned with, the vertical and horizontal signals may be skewed so that each probe receives signals from both polarizations. This problem causes a less than maximum signal to noise ratio which can result in a noisy television picture and lines through the picture or a picture on a picture.

To overcome the problem of the fixed probes, a rotating probe was developed. As a dish antenna is aligned with different satellites, the probe may be rotated to receive either a vertically polarized signal or a horizontally polarized signal. This system is in common use in the TVRO market today.

An LNA amplifies the signal by an amplification factor which is most often described as gain. Gain is computed by a well known and understood formula or equation. If the signal is amplified by a factor of 2, the gain is 3 dB, a factor of 10 is a gain of 10 dB, and a factor of 100 is a gain of 20 dB, etc. At the same time the signal is amplified, the amplifier is adding undesired noise power to the signal. It is important in satellite reception that the ratio of gain to noise be the maximum attainable value.

It is equally important that the antenna feed intercept as much of the signal as possible and route the signal to the LNA with the least amount of loss possible. The alternative to proper feed design and low noise amplifiers is to make the receiving antenna larger so as to gather a stronger signal. However, costs rapidly escalate as antenna size is increased.

The present invention discloses apparatus for collecting signals of orthogonal polarization while providing the optimum attainable signal to noise ratio or noise figure for the system without contaminating the purity of the signal.

U.S. Patent 2,880,399 (Murphy) discloses a microwave transmission system in which a hook shaped probe antenna is disposed within a circular wave guide. The hook shaped probe antenna has a particular configuration which includes a double reverse bend portion, a straight portion disposed at an angle to the longitudinal axis of the wave guide, and a ball portion at the end of the substantially straight portion.

U.S. Patent 4,071,833 (Gould) discloses a hook shaped element in a generally rectangular wave guide, or, actually, a pair of hook like elements in a square wave guide, with the square wave guide divided in half so that a hook element is disposed in each portion of the wave guide. The hook elements extend into the wave guide from the rear end wall.

U.S. Patent 4,414,516 (Howard) discloses a rotatable antenna or probe disposed within a circular wave guide. The antenna or probe is of a generally U-shaped configuration and extends into the wave guide from the rear wall. The '516 patent also discloses, as prior art, a generally L-shaped probe extending through the back of the wave guide.

In a preferred embodiment, the invention described and claimed herein comprises a feed and circuitry usable for receiving radio or microwave signals, such as satellite signals for a TVRO dish or antenna, including a pair of probes located on the back wall of a wave guide. The probes are oriented ninety degrees, or in an orthogonal position, to each other. Through the use of electronic circuitry the signals from the two probes are combined such that the maximum attainable signal to noise ratio is provided for a desired polarization and the undesired polarization from the two probes is cancelled. Alternatively, both polarization components from the probes are appropriately summed so that they both may be used.

Among the preferred embodiments of the present invention are the following:

To provide new and useful antenna feed apparatus;

To provide new and useful apparatus for receiving radio signals;

To provide new and useful antenna feed apparatus having a pair of probes oriented ninety degress to each other;

To provide new and useful circuitry for combining signals of a desired polarization from a pair of orthogonally oriented probes;

To provide new and useful antenna feed apparatus in which maximum attainable signal to noise ratio is achieved;

To provide new and useful apparatus in which the components of an undesired polarization from a pair of orthogonally oriented probes are cancelled; and

To provide new and useful apparatus for combining desired polarization components from a pair of probes located in a feed.

## BRIEF DESCRIPTION OF THE DRAWINGS

Figure 1 is a perspective view of a satellite dish antenna.

Figure 2 is a front view of a prior art feed

Figure 3 is a view in partial section taken generally along line 3-3 of Fig. 2.

Figure 4 is a front view of another prior art feed.

Figure 5 is a view in partial section taken generally along line 5-5 of Fig. 4.

Figure 6 is a perspective view of another prior art feed.

Figure 7A is a front view of a feed embodying the present invention.

Figure 7B is a view in partial section taken generally along line 7B-7B of Fig. 7A.

Figure 8A is a front view of an alternate embodiment of the apparatus of Figs. 7A and 7B.

Figure 8B is a front view of another alternate embodiment of the apparatus of Figs. 7A and 7B.

Figure 9A is a schematic circuit diagram of the apparatus of the present invention.

Figure 9B is a schematic diagram of an alternate embodiment of the apparatus of Fig. 9A.

Figure 10 is a schematic circuit diagram of an alternate embodiment of the apparatus of the present invention.

Figure 11 is a schematic circuit diagram of another alternate embodiment of the apparatus of the present invention.

Figure 12 is a schematic circuit diagram of another alternate embodiment of the apparatus of the present invention.

Figure 13 is a schematic circuit diagram of still another alternate embodiment of the apparatus of the present invention.

Figure 14 is a schematic circuit diagram of still another alternate embodiment of the apparatus of the present invention.

Figure 15 is another schematic circuit diagram of another alternate embodiment of the apparatus of the present invention.

## DESCRIPTION OF THE PREFERRED EMBODIMENT

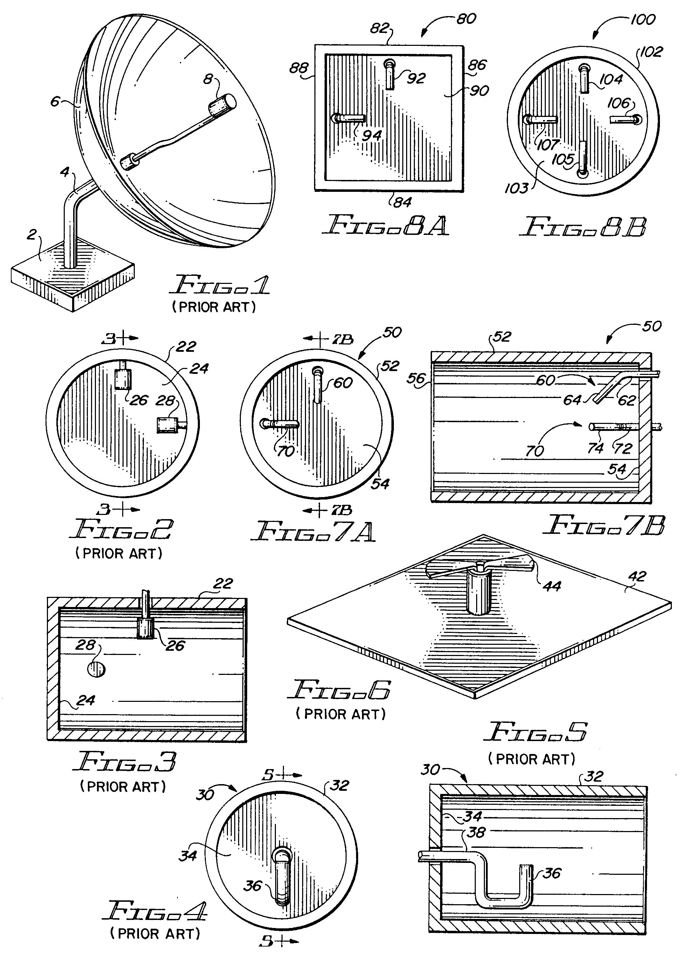

Figure 1 is a perspective view of a satellite dish antenna 6 secured to a support base 2 by appropriate support structure 4. The satellite dish 6 is a parabolic antenna which receives microwave signals and focuses them at a feed horn 8. The feed horn 8 is, of course, disposed at the focal point of the parabolic dish 6 in order to receive the concentrated or focused microwave signals. From the feed horn, the microwave signals are appropriately amplified and routed to a television receiver remote from the antenna 6.

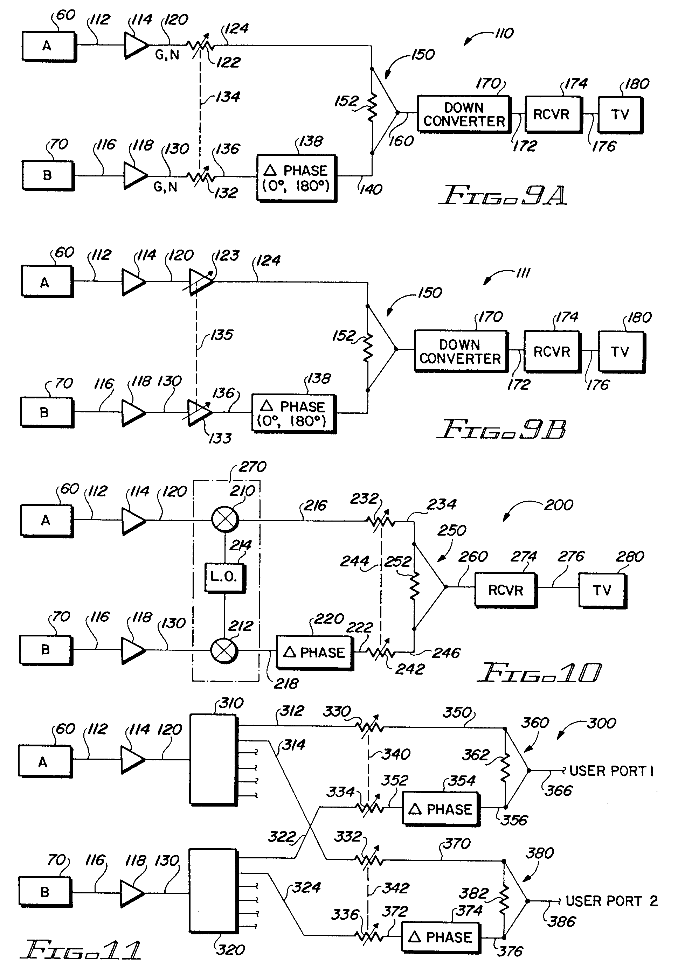

Examples of prior art feeds are shown in Figs. 2 and 3, Figs. 4 and 5, and Fig. 6.

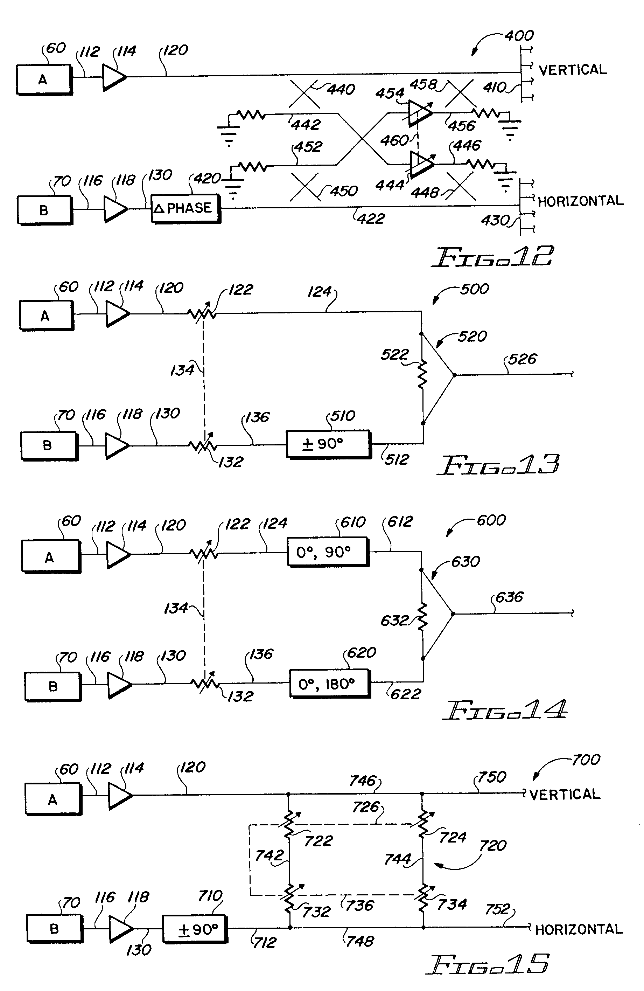

Figures 2 and 3 disclose a cylindrical wave guide 22 with a back wall 24. A pair of probes 26 and 28 is located inside the wave guide 22. The probes 26 and 28 are disposed substantially ninety degrees to each other. Probe 26 is aligned to receive vertically polarized signals, and probe 28 is aligned to receive horizontally polarized signals.

While the wave guide 22 is illustrated as being cylindrical, it will be understood that the configuration of the wave guide need not be cylindrical. It may be square, if desired. Moreover, other cross sectional configurations may also be used.

In Fig. 3, it is shown that the probes 26 and 28 are disposed in different planes which are parallel to the back wall 24. As is commonly known and understood, when two probes are located within the same plane in a wave guide, there is generally interaction between the two probes. This interaction can cause a probe to couple to an orthogonally oriented field, even though the probes may be physically aligned substantially parallel to the respective vertically and horizontally polarized signals.

Figure 4 is a front view of a feed 30, and Fig. 5 is a side view in portion section of the feed 30. In Figs. 4 and 5, a circular wave guide 32 with a back wall 34 is shown. A probe 36 is shown extending outwardly from the back wall 34. The probe 36 is generally a U-shaped element attached to a holder element 38 the holder element 38 extends through the back wall 34. The probe 36 is rotatable through the back wall 34, and thus may be appropriately aligned to receive either the vertically polarized signals or the horizontally polarized signals.

In Fig. 6, a conductive planar surface 62 is shown, with a rotatable dipole 44 disposed adjacent to the surface 42. The dipole 44 maintains an orientation generally parallel to the surface 42, but may be rotated to receive either the horizontally or vertically polarized signals, as desired.

Figure 7A is a front view of a feed 50 embodying the present invention. Figure 7B is a view in partial section taken generally along line 7B-7B of Fig. 7A. For the following discussion of the feed 50, reference will be made to Figs. 7A and 7B.

The feed 50 includes a generally cylindrical wave guide 52 having a back wall 54 and a front end 56. The front end 56 is open.

Extending through the back wall 54 is a pair of probes 60 and 70. The probe 60 is oriented generally in the vertical plane and the probe 70 is oriented generally in the horizontal plane.

As best shown in Fig. 7B, the probes 60 and 70 include two straight portions, with one straight portion extending generally parallel to the walls of the cylindrical wave guide 52 and through the rear wall 54, and the second portion extending at an obtuse angle to the first portion.

The probe 60 includes a first section or portion 62 which is generally parallel to the cylindrical wave guide 52. The first portion 62 extends through the back wall 54 substantially perpendicularly thereto. The second section or portion 64, remote from the wall 54, is disposed at an obtuse angle to the portion 62. Both sections or portions 62 and 64, as may be understood from Fig. 7A, remain in a single plane. For purposes of the present invention, and as defined herein, the probe 60, with its two portions 62 and 64, comprises an element for receiving the vertically polarized signals. A plane passing through the probe 60 is disposed in the vertical plane.

The probe 70 similarly includes a first section or portion 72 and a second section or portion 74. The first portion 72 extends through the back wall 54 and is generally parallel to the first portion 62 of the probe 60. The second portion 74 is generally oriented at an obtuse angle to the first portion 72. The portions 72 and 74 remain in the same plane, and as illustrated in Fig. 7A, that plane is a horizontal plane.

While the probes 60 and 70 are illustrated as including or having two portions or sections, they need not be limited to having two sections or portions. Other configurations may also be used. However, the probes, of whatever configuration, extend through the rear wall 54.

The plane defined by the portions 62 and 64 of the probe 60 is generally perpendicular to the plane defined by the portions 72 and 74 of the probe 70. Thus, as indicated above, the probe 60 receives vertically polarized signals while the probe 70 receives horizontally polarized signals when the probes are aligned with a satellite. The probes 60 and 70 remain substantially perpendicular to each other, or in an orthogonal relationship. The probes 60 and 70 are not rotatable themselves. However, as will be discussed in detail below, the orientation of the probes 60 and 70 are electronically rotated, as it were, to maximize or optimize the signal to noise ratio of a desired polarization and to cancel the signal of an undesirable polarization.

Figure 8A is a front view of a feed 80 having a non-circular cross-sectional configuration. The cross-sectional configuration of the feed apparatus 80 is generally square. The feed apparatus 80 comprises an alternate embodiment of the feed apparatus 70 illustrated in Figs. 7A and 7B.

Feed 80 includes a top wall 82, a bottom wall 84, and a pair of side walls 86 and 88. The feed 80 also includes a back or rear wall 90. Extending through the back wall 90 is a pair of probes 92 and 94.

The probes 92 and 94 are orthogonally oriented with respect to each other. The probe 92 is located in the vertical plane and the probe 94 is located in the horizontal plane.

As discussed above, the probes 92 and 94 may be of various configurations, and are not limited to the configuration of the probes 60 and 70 as illustrated in Figs. 7A and 7B. However, the probes should remain disposed substantially perpendicular to each other. That is, planes in which the probes lie should be in an orthogonal relationship to each other.

Figure 8B is a front view of another alternate embodiment of the feed apparatus of the present invention, comprising a feed apparatus 100 which includes four probes, 104, 105, 106, and 107 disposed in a cylindrical wave guide 102.

The four probes are paired aligned, with the aligned pairs disposed in an orthogonal orientation to each other. The probes 104 and 105 comprise one pair, and the probes 106 and 107 comprise the other pair. A plane in which the probes 104 and 105 lie is substantially perpendicular to a plane in which the probes 106 and 107 lie. The probes 104, 105, and 106, 107 extend through a rear wall 103 of the wave guide 102.

The probes 104 and 105 may couple or connect together, and the probes 106 and 107 may connect together. In the alternative, output from probes 104 and 105 may be summed, and the output from the probes 106 and 107 may be summed. The two summed outputs may then be summed together.

If the probe pairs are connected together, then each pair is connected to a balun and the outputs from the baluns may be processed as described below for a single pair of orthogonally disposed probes.

The electronic rotation of the polarized signals, in order to maximize the signal to noise ratio of a desired signal and at the same time minimize an undesired signal, is accomplished by the apparatus schematically illustrated in the embodiments of Figs. 9A, 9B, 10, 11, 12, 13, 14, and 15. Unless otherwise indicated, as in the embodiments of Figs. 12 and 15, the horizontally polarized signal is, for illustrative purposes, the desired signal, and the signal to noise ratio is accordingly maximized for the horizontally polarized signal.

Figure 9A is a schematic representation of circuit apparatus 110 embodying the apparatus of the present invention. In Fig. 9A, the probes 60 and 70 are connected to a pair of low noise amplifiers 114 and 118 by a pair of conductors 112 and 116, respectively. Unless the probes 60 and 70 are properly aligned with a satellite, the vertical and horizontal signals from the satellite will be skewed to some extent. In the case of skewed signals, each probe 60 and 70 will couple to both the vertical and horizontal signal components which are transmitted from the satellite.

The circuit apparatus 110 receives the polarized signals and effectively "rotates" the signals into alignment with the probes 60 and 70 such that the signal to noise ratio of the desired signal is maximized and the undesired polarized signal is substantially eliminated. For illustrative purposes herein, in the embodiments of Figs. 9A and 9B and in the embodiment of Figs. 10, 11, 13, and 14, as stated above, it will be signal to noise ratio of the horizontally polarized signal that will be maximized. Accordingly, the vertical components from both the probes 60 and 70 will be substantially eliminated, thus effectively electronically aligning the probes with the satellite signals such that only the horizontally polarized signal is processed.

The vertical components of both signals in the apparatus 110 are conducted from probe 60 along conductor 112 to the low noise amplifier 114. The amplified signal from the low noise amplifier or LNA 114 is then passed along conductor 120 to a variable resistive network 122. From the variable resistive network 122, the amplified and attenuated vertical components are conducted along a conductor 124 to a power combining or summing network 150.

The amplified horizontal components of the signals from the LNA 118 are conducted from LNA 118 along a conductor 130 to a variable resistive network 132. The variable resistors or pads 122 and 132 are coupled together by a coupling system 134 for a mutual, but not necessarily identical, adjustment. The purpose of the variable resistors or pads 122 and 132 is to adjust the level of the signals to achieve the maximum signal to noise ratio of the desired polarization. The vertical component of the signal received by either probe 60 or probe 70 will be attenuated to make it the same amplitude as the vertical component portion of the signal received by the other probe. With the vertical portions of the signals having the same amplitude, they may be cancelled, as set forth below.

From the variable resistor 132, the amplified components of the signals from the probe 70 then are conducted to a delta phase section 138 on a conductor 136. The delta phase section 138 includes a zero degree setting and a 180 degree setting, either of which may be used, depending on the desired polarization, to provide a phase relationship for achieving the maximum signal to noise ratio for the desired polarization and for cancelling the undesired polarization components.

If the probe alignment with respect to the satellite is within certain specified limits, the delta phase section is set to zero, which effectively eliminates the need for the delta phase section. This, of course, is determined for each installation at the time the dish and feed system (see Fig. 1) is set up or installed.

From the delta phase section 138, the signal from the probe 70, as amplified and attenuated, is conducted along a conductor 140 to the power combiner 150.

The power combiner 150 includes a resistor 152. Since the horizontal components of the signals from the probes 60 and 70 are desired, the vertical portions of the signals will be cancelled in the resistor 152. The vertical portions have been appropriately attenuated by the variable resistors or pads 122 and 132 to be equal in amplitude to each other, and they are cancelled by the resistor 152 when the delta phase section is set to the proper phase, which is either zero or 180 degrees.

Probes 60 and 70 each receive vertical and horizontal components as transmitted from the satellite. If it is assumed, as stated above, that the horizontal components as transmitted from the satellite are desired, then the variable resistor pads 122 and 132 are adjusted and the delta phase section is adjusted to give a maximum signal to noise ratio for the horizontal signal. Simultaneously, the vertical signal is eliminated by the resistor 152. The result is that the signal from the power combiner 150 conducted along a conductor 160 to a down converter 170 includes only the combined horizontally polarized components received by the probes 60 and 70, as appropriately amplified by the LNAs 114 and 118, and with the minimum noise contribution.

From the down converter 170, a signal is conducted along conductor 172 to a receiver 174, and the signal in the receiver 174 is appropriately processed, etc., and made usable by a television set 180. The signal is conducted from the receiver 174 to the television 180 on a conductor 176.

It will be noted that the variable resistors 122 and 132 are coupled for joint adjustment. The same terms or physical/mechanical relationships are used in the descriptions of other embodiments, below. The term "coupled" simply refers to the electronic connection between the two elements. Typically, one resistor ramps up while the other ramps down in such circumstances. That is, "coupling" does not indicate or mean that they both increase or decrease at the same time or at the same rate. The resistors need not ramp at the same increments or even in a linear manner. For example, one resistor could be held steady while the other increases or decreases.

Typically, in the various embodiments of the apparatus of the present invention, except as discussed for the embodiment of Fig. 15, one resistor may ramp up while the other ramps down so that the amplitude of the desired polarized signal may remain generally constant. However, under other circumstances other relationships may be desired.

Figure 9A comprises a schematic circuit diagram of the apparatus of the present invention in its simplest or general form. Figure 9B is a schematic representation of a portion of the circuitry apparatus of Fig. 9A comprising circuitry apparatus 111, in which the variable resistors 122 and 132 of apparatus 110 are replaced by variable gain amplifiers 123 and 133, respectively. The variable gain amplifiers 123 and 133 are appropriately coupled together by coupling element(s) 135.

Signal components received by the probe 60 are routed to the low noise amplifier 114 on the conductor 112, and the amplified signals are then routed on the conductor 120 to the variable gain amplifier 123.

Signal components received by the probe 70 are routed to the low noise amplifier 118 on the conductor 116, and the amplified signals are then routed on the conductor 130 to the variable gain amplifier 133. From the variable gain amplifiers 123 and 133, the respective signals are routed on the conductors 124 and 136 and the signals are then processed as discussed above for the apparatus 110.

Thus, the variable resistors or pads utilized in the apparatus 110 may be replaced with variable gain amplifiers, if desired. Both the variable resistors and the variable gain amplifiers vary the amplitude of the signals passing through them in a controllable manner. For most of the embodiments discussed herein, either the variable resistors or the variable amplifiers may be used. However, in the embodiment of Fig. 12, it may be best to use variable gain amplifiers, and in the embodiment of Fig. 15 it may be best to use variable resistors.

In Fig. 10, which comprises an alternate embodiment 200 of the circuitry of Figs. 9A and 9B, the received signals are down frequency converted prior to entering into a power combiner. In Fig. 10, the probes 60 and 70 conduct their respective vertical and horizontal components of the vertically and horizontally polarized signals, as they are received by the probes, on the respective conductors 112 and 116, and through the LNAs 114 and 118, respectively, to a pair of mixers 210 and 212, respectively, on conductors 120 and 130, also respectively. A local oscillator 214 is connected to both mixers. The mixers 210 and 212 and the local oscillator 214 comprise a pair of down converters 270.

The local oscillator 214 and the mixers 210 and 212 comprise down converters 270 which convert the received radio frequency down to an intermediate frequency. The components of the signals received by the probes 60 and 70 are then processed at the intermediate frequency to achieve a maximum signal to noise ratio.

The horizontal components of the signals received by the probe 70 are sent on conductor 218 at the intermediate frequency through a delta phase 220 and then on a conductor 222 through a variable resistor 242. The vertical components of the signals received by the probe 60 are routed at the intermediate frequency on conductor 216 through a variable resistor 232. Coupling element(s) 244 couples together the variable resistors 232 and 242, as discussed above for the circuit apparatus 110 of Fig. 9A.

The purpose of the delta phase 220 is substantially the same as the purpose of the delta phase section 138 discussed above in conjunction with the apparatus 110 of Fig. 9A. Similarly, the purpose of the variable resistors or pads 232 and 242 is substantially the same as previously discussed, namely to attenuate the components of both signal paths received by the probes 60 and 70 to make the vertical components the same amplitude. Note that in Fig. 9A the delta phase section appears after the variable resistor, while in Fig. 10 the delta phase section is before the variable resistor. It makes no difference which appears first.

Under certain circumstances there may be advantages to down converting the received signals to an intermediate frequency prior to processing the received radio signals. Thus, in Fig. 10 the mixers 210 and 212 and the local oscillator 214 comprise a pair of down converters 270 for down converting the signal prior to processing the signals, rather than processing the signals prior to down converting, as in the embodiment of Fig. 9A. While the apparatus 110 of Fig. 9A needs only a single down converter, since the unwanted portions or components of the received signals are cancelled, the apparatus 200 of Fig. 10 utilizes a "pair" of down converters because the signals from both probes 60 and 70 are down converted.

The signals are routed from the variable resistors 232 and 242 on conductors 234 and 246, respectively, to a power combiner 250. The power combiner 250 is substantially the same as the power combiner 150, discussed above. The power combiner 250 combines the desired horizontal polarization to yield a maximum signal to noise ratio while the undesired vertical components are eliminated in a resistor 252. The resulting horizontal components of the signals received by the probes 60 and 70 are then routed to receiver 274 by the conductor 260. From the receiver 274 the processed signals are then routed on a conductor 276 to a television set 280.

Figure 11 is a schematic representation of another alternate embodiment, namely circuitry apparatus 300, of the present invention. The alternate embodiment 300 demonstrates how the basic circuit of Fig. 9A may be configured for multiple user ports. The signal components from the probes 60 and 70 in the circuitry apparatus 300 are again appropriately transmitted to LNAs 114 and 118, respectively, and from the LNAs 114 and 118, the amplified signals on conductors 120 and 130 are respectively routed to a pair of power dividers 310 and 320. The power dividers 310 and 320 appropriately divide the amplified signal for as many user ports as desired.

Again, it will be remembered that the probe 60 receives vertical components of both the vertical and horizontally polarized signals from a satellite, and the probe 70 receives the horizontal components of both vertical and horizontally polarized signals. Accordingly, the power dividers 310 and 320 divide only the vertical components and horizontal components of the signals from the probes 60 and 70, respectively.

From the power dividers 310 and 320, the signal portions for each user port are conducted through the circuitry which is essentially the circuitry of Fig. 9A, namely to variable resistors or variable pads. The signals from the horizontal probe 70 are conducted to a delta phase sections for appropriate phasing. The signals for each port are then combined in power combiner networks, where the horizontally polarized components are summed for maximum signal to noise ratio and the vertical components are eliminated.

In Figure 11, a pair of conductors 312 and 314 are shown extending from the power divider 310. The conductor 312 extends to a variable resistor or variable pad 330. From the variable resistor or pad 330 a conductor 350 extends to a power combiner 360.

The conductor 314 extends to a variable pad or variable resistor 332, and a conductor 370 extends from the variable resistor or pad 332 to a power combiner 380.

A pair of conductors 322 and 324 are shown extending from the power divider 320. The conductor 322 is paired with the conductor 312 for user port number 1, and the conductor 324 is paired with the conductor 314 for user port number 2.

The conductor 322 extends to a variable resistor or pad 334. From the variable resistor or pad 334, a conductor 352 extends to a delta phase section 354. From the delta phase section 354, a conductor 356 extends to the power combiner 360.

The power combiner 360 includes a resistor 362. The vertical components from both the probes 60 and 70 are cancelled by the resistor 362. The resulting signal from the power combiner 360, which comprises only the horizontally polarized signal, is then conducted along a conductor 366 to the appropriate circuitry for ultimate transmission to a television set.

For user port number 2, the conductor 314 extends to a variable resistor or pad 332, and a conductor 370 extends from the variable resistor or pad 332 to a power combiner 380. The conductor 324 extends to a variable resistor pad 336, and a conductor 372 extends from the variable resistor or pad 336 to a delta phase section 374. The delta phase section 374 is in turn connected to the power combiner 380 by a conductor 376.

The power combiner 380 for the user port 2 includes a resistor 382. The undesired vertical components from the signals 60 and 70 are cancelled in the resistor 382, and the resulting signal transmitted or conducted on a conductor 386 comprises the horizontally polarized signal from a satellite.

The circuitry illustrated in the embodiment 300 for two user ports will be appropriately duplicated for as many user ports as desired. It also allows one user to process the vertical signal, while another user is processing the horizontal signal.

Reference number 340 indicates a coupling element or elements for coupling the resistors or pads 330, and 334. Reference number 342 indicates a coupling element or elements for appropriately coupling the variable resistors or pads 332 and 336.

Figure 12 is a schematic circuit diagram of another alternate embodiment, comprising an embodiment 400 in which the basic circuit apparatus of the present invention is configured for separate vertical and horizontal outputs and uses a coupling circuit and variable gain amplifiers. The apparatus 400, like the apparatus 300, may also be used by a plurality of users.

The vertical portions of both the vertically and horizontally polarized signals received by the probe 60 are conducted along conductor 112 to the LNA 114. The conductor 120 from the LNA 114 then extends to a power splitter 410, from which a plurality of conductors extend. The conductors from the power splitter 410, will, of course, transmit only the vertical portions of the signals as received by the vertical probe 60 and the horizontal probe 70.

The horizontal components of the signals received by the probe 70 are conducted along conductor 116 to the LNA 118, and from the LNA 118 the conductor 130 extends to a delta phase section 420.

The delta phase section preferably has a zero degree and a one-hundred-eighty degree setting, and the appropriate setting will be used, depending on the orientation between the probe and the satellite and on which polarization is desired. From the delta phase section 420, a conductor 422 extends to a horizontal power splitter 430. The power splitter 430, like the power splitter 410, includes a plurality of conductors or outputs extending from it to conduct the horizontal components from the probe 70 and the probe 60. The vertical and horizontal outputs may then be used as desired.

A coupler 440 is used to couple a portion of the signal from the conductor 120 to a conductor 442. The coupled portion of the signal on conductor 442 is amplified by a variable gain amplifier 444. A portion of the signal from the amplifier 444 is then coupled to the conductor 422 from a conductor 446 by a coupler 448.

A coupler 450 is used to couple a portion of the signal from the conductor 422 to a conductor 452. The coupled portion of the signal on conductor 452 is amplified by a variable gain amplifier 454. A portion of the amplified signal from the amplifier 454 is then coupled to the conductor 120 by a coupler 458 from a conductor 456.

The conductors 442, 446, 452, and 456 are appropriately resistor terminated to ground to substantially eliminate signals flowing in the direction of the resistors.

The variable gain amplifiers 444 and 454 are appropriately coupled by coupling element(s) 460 so that the amplitudes of the coupled signals may be adjusted as desired.

The delta phase section 420 is set to either zero or one hundred eighty degrees to yield the maximum signal to noise ratio at the vertical and horizontal power splitters 410 and 430, respectively. For the same settings and adjustments, horizontal components are substantially eliminated from the vertical outputs for the power splitter 410, and the vertical components are substantially eliminated from the horizontal outputs from the power splitter 430.

The variable gain amplifiers are coupled together for joint adjustment. As with the variable resistors used in the other embodiments of the present invention, the "joint adjustment" refers to both amplifiers being adjusted or varied at the same time, but not in necessarily the same manner.

Figure 13 is a schematic circuit diagram of an alternate embodiment 500 of the apparatus of the present invention illustrating the adaptation of the basic circuitry of the apparatus of the present invention for selecting either right hand circular polarization or left hand circular polarization.

In Fig. 13, the amplified signals on conductor 120 are conducted to the variable resistor or variable pad 122. The conductor 124 extends from the pad 122 to a power combiner 520. The horizontal components of the signal received by the probe 70, after appropriate amplification, are conducted on conductor 130 to the variable pad or variable resistor 132. The resistors 122 and 132 are appropriately coupled together by coupling element(s) 134 for joint adjustment. The terms "appropriately coupled..." and "joint adjustment" are used in the same sense as discussed above.

From the variable resistor 132, the conductor 136 extends to a delta phase section 510, which is a plus or minus ninety degree adjustment section. A conductor 512 extends from the delta phase section 510 to the power combiner 520. Again, the signal to noise ratio of the desired polarization, in this case either the right hand circular polarization or the left hand circular polarization, as desired, is maximized, while the undesired components are substantially eliminated in the power combiner 520. The resulting output on a conductor 526 from the power combiner 520 represents the right hand or left hand circular polarization, as desired, in accordance with the adjustment or setting of the delta phase section 510.

Figure 14 comprises a schematic circuit diagram of another alternate embodiment of the apparatus of the present invention, namely apparatus 600, which illustrates the basic circuitry of the apparatus of the present invention configured to receive either linear or circular polarizations. The advantage of the apparatus 600 is that it is able to receive either linear or circular polarization signals using only a single feed.

The apparatus 600 includes the probe 60, the LNA 114, and the conductor 120, as discussed above. The conductor 120 is connected to the variable resistor or pad 122. The conductor 124 extends from the variable resistor pad 122 to a delta phase section 610, which is a zero or ninety degree section.

The probe 70 is connected through the conductor 116 to the LNA 118, and the conductor 130 extends from the LNA 118 to the variable resistor or pad 132. The conductor 136 extends from the variable resistor 132 to a second delta phase section 620, which is a zero or one hundred eighty degree section. The resistors or pads 122 and 132 are appropriately coupled by element(s) 134 for joint adjustment, as discussed above.

For receiving linear polarization signals, the delta phase section 610 is set for zero degrees. For receiving circular polarization signals, the delta phase section 610 is set to ninety degrees. The delta phase section 620 may be set to zero degrees or one hundred eighty degrees, depending on the orientation of the probe and satellite and on which linear polarized signal is desired.

For circular polarization signals, the delta phase section 620 is set to zero degrees for either one of the right hand circular polarization (RHCP) or left hand circular polarization (LHCP), and to one hundred eighty degrees for the other. It will be noted that the orientation of the probe and the satellite is immaterial for circular polarization. Essentially, the delta phase section 620 is used to select between circular polarizations, either RHCP or LHCP, or, for orthogonal linear polarizations, either horizontal or vertical.

In accordance with the desired settings of the delta sections 610 and 620, the apparatus 600 may be adjusted to receive either linear or circular polarizations. The ninety degree delta phase section 610 is connected to a power combiner 630 by a conductor 612, and the one hundred eighty degree delta phase section 620 is connected to the power combiner 630 by a conductor 622. Again, variable resistors and the delta phase sections are adjusted or set to maximize the signal to noise ratio for the desired polarization while the undesired polarization is substantially eliminated in a resistor 632 in the power combiner 630.

Figure 15 is a schematic circuit diagram of another alternate embodiment 700 of the apparatus of the present invention. The circuitry embodied in apparatus 700 illustrates the configuration of the basic circuit utilizing a variable coupler.

The output from the probe 60 is transmitted to the LNA 114 by the conductor 112. The output from the LNA 114 is transmitted on conductor 120.

The signal received from the probe 70 is conducted to the LNA 118 on the conductor 116. The output of the LNA 118 is conducted on the conductor 130 to a plus or minus ninety degree delta phase section 710. An output conductor 712 extends from the delta phase section 710.

A pair of variable resistors or pads 722 and 732 are connected by conductor 742 and they are in turn connected between the conductors 120 and 712. A second pair of variable resistors or pads 724 and 734 are connected by conductor 744. The variable resistor pair 722 and 732 are connected to the variable resistor pair 724 and 734 by conductors 746 and 748. An output conductor 750 is connected to the conductor 746, and an output conductor 752 is connected to the conductor 748.

The variable resistors or pads 722 and 724 are coupled together by coupling element(s) 726 for joint or common adjustment. Similarly, the variable resistors 732 and 734 are coupled together by coupling element(s) 736 for joint adjustment. The element(s) 726 29 and 736 are in turn coupled together. The four variable resistors, as connected together, comprise a variable quadrature coupling system 720. In accordance with the adjustment of the variable resistors or pads 722, 724 and 732, 734, the output on the conductor 750 comprises the vertical polarization signal and the output on the conductor 752 comprises the horizontal polarization signal.

It will be noted that the apparatus of the present invention, as discussed with its various embodiments above, accomplishes at least three primary functions:

1. It provides maximum attainable signal to noise ratio, (or optimum noise figure or noise temperature). That is, the signal to noise ratio, as gathered by the antenna and established by the LNA (See Fig. 1) is preserved. The apparatus of the present invention provides a noise figure equivalent to what a single probe, such as illustrated in Figs. 4 and 5, provides when such single probe is appropriately aligned with an input signal, and appropriately connected to an LNA. However, the orientation of the probes in the apparatus of the present invention is immaterial as far as an input signal is concerned. The orthogonal relationship between the two probes 60 and 70 is maintained, and the circuitry maximizes the signal to noise ratio of the desired signal and substantially cancels the undesired signal components.

2. The undesired components of the received signal are substantially cancelled.

3. The desired components of the received signal are summed or added to provide the maximum signal to noise ratio for the desired polarization signal.

It will be noted that in the above examples, the delta phase section settings have been stated with relative precision. It will be understood that the settings may not be exact, but rather will be set according to the needs of an individual feed.

While the principles of the invention have been made clear in illustrative embodiments, there will be immediately obvious to those skilled in the art many modifications of structure, arrangement, proportions, the elements, materials, and components used in the practice of the invention, and otherwise, which are particularly adapted to specific environments and operative requirements without departing from those principles. The appended claims are intended to cover and embrace any and all such modifications, within the limits only of the true spirit and scope of the invention.

## Claims

1. Electronically rotatable polarization antenna feed apparatus for receiving polarized radio signals having first components and second components, comprising, in combination:

first probe means for receiving the first components of the polarized radio signals;

second probe means oriented substantially orthogonal to the first probe means for receiving the second components of the polarized radio signals;

first amplifier means connected to the first probe means for amplifying the first components of the polarized radio signals;

first variable attenuating means connected to the first amplifier means for attenuating the amplified first components of the polarized radio signals;

second amplifier means connected to the second probe means for amplifying the second components of the polarized radio signals;

second variable attenuating means connected to the second amplifier means for attenuating the amplified second components of the polarized radio signals;

means for adjusting the first and second variable attenuating means to provide the desired amplitude of the amplified first and the second components of the polarized radio signals;

delta phase means for providing a desired phase relationship between the first and second components of the polarized radio signals; and

power combiner means for combining desired portions of the amplified first and second components to provide a maximum signal to noise ratio of a desired polarization.

2. Apparatus for receiving polarized radio signal components, including, in combination:

first means for receiving first vertical and horizontal components of a polarized radio signal;

second means for receiving second vertical and horizontal components of the polarized radio signal;

means for amplifying the received first and second vertical and horizontal components; and

means for combining the amplified first vertical components from the first means to the amplified second vertical components of the second means to provide a combined vertical output signal and for combining the amplified first horizontal component from the first means to the amplified second horizontal component of the second means to provide a combined horizontal output signal.

3. Apparatus for receiving polarized radio signals, having first and second components, including, in combination:

first means for receiving and amplifying the first components of the polarized radio signals;

second means for receiving and amplifying the second components of the polarized radio signals;

means for adjusting the amplitude of the amplified first and second components; and

means for summing the amplified and amplitude adjusted first and second components to maximize the signal to noise ratio of a desired polarization of the first and second components.

4. Electronically rotatable polarization antenna feed apparatus for receiving polarized radio signals having first and second components and for maximizing the signal to noise ratio in the signals, comprising, in combination:

probe means for receiving the polarized radio signals, including

a first probe for receiving the first components of the polarized radio signals, and

a second probe for receiving the second components of the polarized radio signals, both first and second components having desired and undesired portions;

amplifier means for amplifying the received radio signals, including

first amplifier means for amplifying the first components, and

second amplifier means for amplifying the second components;

delta phase means for providing a desired phase relationship between the first and second components; and

combiner means for combining the desired portions of the amplified first and second components having the desired phase relationship to provide a maximum signal to noise ratio of the received and amplified radio signals.

5. The apparatus of claim 1 or claim 4 in which the delta phase means comprises a minus ninety and a plus ninety degree delta phase section for circular polarization.

6. The apparatus of claim 1 or claim 4 in which the delta phase means includes a zero and ninety degree delta phase section for selecting a desired one of linear and circular polarization.

7. The apparatus of claim 1 or claim 4 in which the delta phase means includes a zero and one hundred and eighty degree delta phase section for linear polarizations.

8. The apparatus of any of claims 1,4,5,6 or 7 in which the delta phase means includes a first state and a second state, and

switching means for selecting a desired state for receiving the maximum signal to noise ratio of a desired polarized radio signal.

9. Electronically rotatable polarization antenna feed apparatus for receiving a polarized radio signal having a first component and a second component, comprising, in combination:

first probe means for receiving the first component of the polarized radio signal;

second probe means oriented substantially orthogonal to the first probe means for receiving the second component of the polarized radio signal;

first amplifier means connected to the first probe means for amplifying the first component of the polarized radio signal;

first variable attenuating means connected to the first amplifier means for attenuating the amplified first component of the polarized radio signal;

second amplifier means connected to the second probe means for amplifying the second component of the polarized radio signal'

second variable attenuating means connected to the second amplifier means for attenuating the amplified second component of the polarized radio signal;

delta phase means having two states for providing a desired phase relationship between the first and second components;

power combining means for combining the first and second amplified and attenuated components; and

means for selecting the desired state of the delta phase means and for adjusting the first and second variable attenuating means to provide a maximum signal to noise ratio for the combined components of the polarized radio signal.

10. Apparatus for receiving a first polarized signal and a second polarized radio signal which is substantially orthogonal to the first polarized radio signal, each of which signals have first and second components, comprising, in combination:

first means for receiving the first components of the two polarized radio signals;

second means for receiving the second components of the two polarized radio signals;

means for amplifying the received first and second components of the two radio signals;

first means for combining the amplified first and second components of the first radio signal;

second means for combining the amplified first and second components of the second radio signal;

delta phase means for providing a desired phase relationship between the first and second components; and

means for switching the state of the delta phase means to provide a maximum signal to noise ratio of the combined components of the two radio signals.

FIG.1
(PRIOR ART)

FIG.8A

FIG.8B

FIG.2
(PRIOR ART)

FIG.7A

FIG.7B

FIG.3
(PRIOR ART)

FIG.6
(PRIOR ART)

FIG.5
(PRIOR ART)

FIG.4
(PRIOR ART)

*Fig. 9A*

*Fig. 9B*

*Fig. 10*

*Fig. 11*

FIG. 12

FIG. 13

FIG. 14

FIG. 15

14